# EUROPEAN PATENT APPLICATION

(11) **EP 2 724 773 A1**
(43) Date of publication of application: **30.04.2014**
(21) Application number: 12190029.4
(22) Date of filing: 25.10.2012
(51) Int. Cl.: B01D 69/12, B01D 71/02, B01D 67/00

(54) **Nanosieve composite membrane**

(71) Applicant: Nederlandse Organisatie voor Toegepast -Natuurwetenschappelijk Onderzoek TNO, 2628 VK Delft (NL)
(72) Inventor: Unnikrishnan, Sandeep, 2628 VK Delft (NL); Young, Edward Willem Albert, 2628 VK Delft (NL)
(74) Representative: Jansen, Cornelis Marinus

(57) **Abstract**

The invention is directed to a nanosieve composite and a method for preparing a nanosieve composite membrane.

The nanosieve composite comprises an inorganic nanosieve layer having an average pore diameter of 200 nm or less, and two or more porous layers having an average pore diameter of 1 µm or more, wherein at least one porous layer is at a first side of said inorganic nanosieve layer and at least one porous layer is at a second side of said inorganic nanosieve layer.

## Description

The invention is directed to a nanosieve composite and a method for preparing a nanosieve composite membrane.

Membranes are widely used in various industrial processes, such as in the field of fluid filtration, gas separation, air cleaning, membrane-reactors *etc.* By tuning their structural morphology and material composition, membranes can be applied for different purposes. Membranes are usually fabricated porous or dense using organic (*e.g*. polymer) and/or inorganic (*e.g*. ceramic) materials. Permeation through membranes usually functions by a pore-based diffusion phenomenon or a solution-diffusion phenomenon depending on their structural morphology.

Fluid filtration can be done based on various characteristics of the particles to be separated like charge, adsorptivity, size, mass, *etc.,* of which size based filtration is the most preferred due to its simplicity and effectiveness. Usually, ceramic membranes are most successfully used for filtration (made of *e.g*. alumina), but have a random porosity with a broad pore-size distribution and also have a multitude of tortuous and dead-end pores.

A solution to this problem is the use of thin, geometrically defined ceramic sieves (microsieve or nanosieve), which have circular non-tortuous perforations with a pre-determined size-distribution and porosity. Moreover, they also have a controllable uniform thickness down to a few tens of nanometers.

Although microsieves (with a pore size defined by a pore diameter of about 2-10 µm) can be fabricated in various ways, the fabrication of nanosieves (with a pore size of less than 200 nm) is not trivial. Both micro and nanosieves can be fabricated using polymers (Vogelaar et al., Advanced Materials 2003, 15(16), 1385-1389 and Vlassiouk et al., Proceedings of the National Academic Sciences of the United States of America 2009, 106(50), 21039-21044), but they suffer from fouling, swelling, and non-resistance to specific chemicals that are used in filtration processes. Moreover, self-standing polymer nanosieves need to have a thickness in the micrometer scale (or more) for sufficient mechanical strength, but this increases the flow resistance through them.

WO-A-2006/119915 describes a polymeric membrane having a pore diameter in the range of 0.1-100 nm supported by a carrier membrane having a pore diameter of 1-500 µm.

Inorganic nanosieve membranes on the other hand do not have the aforementioned drawbacks. They can be made very thin, strong and chemically stable. Currently, the fabrication of inorganic nanosieves is limited to a silicon wafer based micromachining confined to clean room processing, which makes it expensive and thus hinders its wide applicability. The industrial scalability of inorganic nanosieve production is crucial for cost reduction and to widen its application base.

US-A-5 968 326 describes a composite membrane comprising an inorganic ion-conducting layer on a cation-selective organic polymer membrane substrate. As possible material for the inorganic ion-conducting layer, this document mentions zeolites.

US-A-2005/0 070 193 describes a sheet-like flexible non-woven substrate having a multiplicity of openings and having a ceramic porous coating. This document further describes the possibility of pre-coating the non-woven with a metal oxide or organosilane adhesion promoter.

US-A-2009/0 069 616 discloses composite membranes comprising a molecular sieve on a polymeric support. The support can have pores or openings in the range of 2 to 100 nm, preferably 20 to 50 nm.

EP-A-1 611 941 describes a membrane on a support for filtering liquid. The disclosure of this document is limited to a banded support structure, having non-porous strips. In addition, the membrane of this document requires a protection layer encapsulating the inorganic membrane and the support.

There remains a need in the art for nanosieves that can be successfully used for filtration and can easily be produced.

Non-prepublished application PCT/NL2012/050283, incorporated herein entirely by reference, discloses a nanosieve composite comprising an inorganic nanosieve layer and supported on a porous polymer membrane substrate at one side of the inorganic nanosieve layer. No additional layers are disclosed at the other side of the inorganic nanosieve layer.

Objective of the invention is to provide a nanosieve composite that overcomes at least part of the problems faced in the prior art.

Further objective of the invention is to provide a nanosieve composite that is more robust, in particular against contact, flexing and/or bending.

The inventors found that one or more of these objectives can at least partially be met by a nanosieve composite comprising an inorganic nanosieve layer and two or more porous layers.

Hence, in a first aspect, the invention is directed to a nanosieve composite comprising an inorganic nanosieve layer having an average pore diameter of 200 nm or less, and two or more porous layers having an average pore diameter of 1 µm or more, wherein at least one porous layer is at a first side of said inorganic nanosieve layer and at least one porous layer is at a second side of said inorganic nanosieve layer.

The inorganic nanosieve layer can also be referred to as "nanosieve". The nanosieve composite can comprise one or more inorganic nanosieve layers, preferably one.

The inorganic nanosieve layer comprises, in addition to the first and second side, an edge, which edge may comprises edge sides.

Suitably, the porous layers have an average pore diameter of 1100 nm or more. Suitably, a porous layer at a first side of said inorganic nanosieve has an average pore diameter of 1 µm or more and a porous layer at a second side of said inorganic nanosieve has an average pore diameter of 1 µm or more, wherein said first and second side of said inorganic nanosieve are the opposite sides of said inorganic nanosieve.

The porous layers can be the same or different. A nanosieve composite having two or more porous layers as defined herein allows for a more flexible nanosieve composite. The porous layer at both the first and second side suitably act as an anti-contact protection to the inorganic nanosieve layer. In addition, the porous layer at both the first and second side together provide mechanical strength to the inorganic layer, which is often delicate. As the inorganic nanosieve layer is thus protected at both sides by a porous layer, the nanosieve composite thus provided can be more robust and be more rollable.

The nanosieve composite can be a membrane and/or be used as a membrane, such as a membrane in a separation process.

The porous layer at both the first and second side suitably allow the inorganic nanosieve layer to be at the neutral line of the composite membrane stack. The neutral line is also referred to as neutral axis or neutral plane. This relates in particular to the neutral line, or neutral plane, of the nanosieve composite as roll, such as in a roll-to-roll process. This provides better rollability as the often delicate inorganic nanosieve layer is subject to less or zero (longitudinal) stress and/or strain. The neutral line is the location of zero (longitudinal) stress, or part of sheet maintaining length during bending and/or rolling.

Preferably, the porous layers at the first and second side have both a comparable Young's modulus and comparable thickness. This allows the nanosieve to be close to the neutral line. In case the Young's modulus of these two porous layers are different, the thickness of these porous layers can be adapted appropriately to ensure that the nanosieve layer in positioned at the neutral line.

Preferably, the inorganic nanosieve layer is geometrically patterned with pores. Preferably, the inorganic nanosieve layer is a thin film.

The average pore diameter of the inorganic nanosieve layer is 200 nm or less, such as 150 nm or less, preferably 100 nm or less. Suitably, the average pore diameter is such as determined by scanning electron microscopy. Suitably, the average pore diameter is the substrate side average pore diameter, such as the average pore diameter as obtained at the substrate side pore openings. Suitably, the pores are circular. The average pore diameter suitably corresponds to the equivalent circular area diameter.

The inorganic nanosieve layer can be a membrane or can act as a membrane in use of the nanosieve composite.

From a practical point of view, the average pore size of the inorganic nanosieve layer is preferably 1 nm or more, such as 2 nm or more, or 5 nm or more. Other means for measuring the average pore diameter include bubble porosimetry.

Preferably, the porous layers are macroporous, preferably the porous layers are macroporous polymer membranes having additional pores in the range 50-1000 nm. A porous layer having an average pore diameter of 1 µm or more includes a perforated layer of non-porous or porous material having perforated pores, or perforations, having an average diameter of 1 µm or more. Although porous layers having an average pore diameter of less than 1 µm still provide protection of the inorganic layer against contact and/or aggressive environment, porous layers with very small pores are somewhat less practical.

Preferably, the inorganic nanosieve layer has a first and second side, labelled top side and a bottom side. A porous layer is suitably provided at the bottom side, this porous layer is preferably a porous membrane substrate at the bottom side of said inorganic nanosieve layer. A porous layer is suitably provided at the top side, this porous layer is preferably a porous film on the top side of said inorganic nanosieve layer. As used herein, "top side" and "bottom side" of the inorganic nanosieve layer indicates the two opposed major sides of the inorganic nanosieve layer, without reflecting any particular orientation of the inorganic nanosieve layer. "Top side" and "bottom side" are used synonymous with "first side" and "second side".

As used herein, porous membrane substrate can also be referred to, in case it is porous polymer membrane substrate to as "polymer membrane", "polymer membrane support", "polymer substrate" and "polymeric support".

Preferably, the nanosieve composite comprises an intermediate layer, such as an adhesion layer, underlayer and/or stiction layer, between the inorganic nanosieve layer and a porous layer. A stiction layer comprises a sticking layer, glue layer and/or sticky layer. A stiction layer is a layer that provides stiction, *i.e*. static friction that needs to be overcome to enable relative motion of objects in contact

Preferably, the nanosieve composite comprises a bottom side intermediate layer, such as between the inorganic nanosieve layer and a porous membrane substrate, preferably such bottom side intermediate layer is an adhesion layer or underlayer.

Preferably, the nanosieve composite comprises a top side intermediate layer, such as between the inorganic nanosieve layer and a porous film. Preferably such top side intermediate layer is a stiction layer. Preferably, an intermediate layer comprises a glue layer; preferably a stiction layer comprises or essentially is a glue layer.

Preferably, one or more of the porous layers are provided with an intermediate layer, that is provided between the inorganic nanosieve layer and said porous layer. Preferably porous layers at both sides of the inorganic nanosieve layer are so provided with an intermediate layer.

Preferably, a porous layer, such as the porous membrane substrate, is provided with a metallic intermediate layer between the inorganic nanosieve and said porous layer, to protect the porous layer from degrading by aggressive fluids penetrating though the nanopores of the inorganic nanosieve layer, at a part of the inorganic nanosieve layer where no porous layer part at the other side covers the nanopores.

The intermediate layer, such as adhesion layer or underlayer, may be present only on the support side (bottom side) of the inorganic nanosieve layer. An intermediate layer may enhance adhesion and optionally serve the purpose of protecting the porous layer, in particular polymeric porous layers, from degrading.

The nanosieve composite suitably further comprises an intermediate layer, such as adhesion layer or underlayer, between the inorganic nanosieve layer and a polymer membrane support. This layer may serve to improve the adhesion of the inorganic nanosieve layer onto the polymer membrane support (which is preferably organic) and/or to provide additional protection to the polymer membrane support (such as against aggressive fluids).

With respect to the bottom side intermediate layer, the terms "adhesion layer" and "underlayer" are well-known to refer to similar layers in the art and can be used interchangeably herein.

Suitably, an intermediate layer, such as adhesion or underlayer layer is a metal layer. An intermediate layer can comprise one or more selected from the group consisting of tantalum, chromium, titanium, and molybdenum.

Preferably, a porous layer comprises a polymeric material, such as plastic. Preferably, a porous layer essentially consists of polymeric material. Preferably, one or more or all porous layers at one or both sides of the inorganic nanosieve layer comprise polymeric material layers or plastic layers, such as are polymeric material layers.

Preferably, a porous membrane substrate comprises a porous polymeric membrane. Preferably, the inorganic nanosieve layer is provided at the bottom side with a porous polymeric membrane substrate. Suitable materials for a porous layer, in particular porous polymeric membrane substrate, include polyethylene naphthalate (PEN), polyethylene terephthalate (PET), polyimide or any other polymer, and any mixtures thereof. The porous membrane substrate can be a polymer membrane support.

Suitably, a porous layer comprises carbon paper (carbon fibre paper), carbon cloth or a metal. Suitably, a porous layer, preferably a porous film, comprises a porous metal or metal alloy film. Suitably, a porous layer, in particular a porous film, comprises a woven or non-woven carbon-fibre based material such as carbon fibre paper or carbon cloth, in particular the porous layer can be a film of such material. The metal could have micropores or microperforations (such as with diameter 1-100 µm) made through the foil. The metal can also be randomly porous.

Preferably, the inorganic nanosieve layer comprises, such as essentially consists of, a metal, alloy or ceramic based material, such as ceramic materials, or an inorganic material mixed together with an organic material.

The inorganic nanosieve layer can be a ceramic nanosieve layer. Suitable ceramic materials include silicon nitride (SisN₄), SiO₂, and Al₂O₃. The inorganic nanosieve layer can also comprise or be a metal (or alloy) nanosieve, such as comprising one or more from the group consisting of chromium, copper, tin, nickel and aluminium.

Suitable inorganic materials mixed together with an organic material include nanoparticles impregnated with or in epoxy or acrylate, such as silica nanoparticles, aluminium oxide nanoparticles or metal nanoparticles.

Preferably, a porous layer is at least partially coated with a protective coating, preferably essentially completely coated with a protective coating, preferably such that essentially no (external) surface of the porous layer is exposed. The protective coating, as referred to hereinafter, is optional.

Preferably, one or more, such as all, porous layers, preferably including the porous membrane substrate of the nanosieve composite, are at least partially coated with a protective coating, preferably essentially completely coated with a protective coating, preferably coated such that essentially no surface of the porous layer is exposed, such as 10 % or less or 1 % or less of the external surface of the coated porous layer is exposed.

The protective coating material is preferably different from the material of the porous layers and/or preferably different form the material of the inorganic nanosieve layer. The protective coating can be an organic or inorganic coating, preferably an inorganic coating. The protective coating suitably allows for modification of the surface energy of the nanosieve composite, in particular of the porous layers such as porous film or porous membrane substrate. Such coating advantageously allows for protecting the porous layers, such as porous film and porous membrane substrate, from corrosion, aggressive fluids and/or absorbing ambient conditions.

A porous layer, such as the polymer membrane support in the nanosieve composite of the invention, preferably further comprises a protective coating. A porous layer, such as the polymer membrane support can be sandwiched between the protective coating and inorganic nanosieve layers. In case of an inorganic protective coating, said porous layer is thus sandwiched between inorganic layers. This protective coating may be in direct contact with the porous layer, such as the polymer membrane support. In an embodiment, the coverage of the protective coating on the porous layer, such as a polymer membrane support, is such that essentially no surface of said porous layer is exposed after the coating has been applied. This does not necessarily mean that the protective coating entirely covers said porous layer. An intermediate layer, such as adhesion layer or underlayer, if present, can cover parts of the porous layer that are not covered by the protective coating, such as inorganic protective coating. Preferably, the coverage of the protective coating of the porous layer is such that essentially no surface of the porous layer is exposed to the environment, such as no more than 10 % of the area of the external surface of the porous layer, in particular for the porous membrane substrate.

An inorganic protective coating can be referred to as "inorganic coating". Suitably, the material of an inorganic protective coating is the same as the material of the inorganic nanosieve layer. It can also be different. Hence, in a preferred embodiment, an inorganic coating is a ceramic coating, such as a silicon nitride coating. Other materials that may be used for an inorganic coating include metals or alloys. An inorganic coating may therefore also comprise one or more selected from the group consisting of chromium, copper, tin, nickel and aluminium. One or more or all protective coatings, if present, can be made or comprise or essentially consist of one or more of these materials. In case of multiple protective coatings, *e.g*. on porous layers on both sides of the inorganic nanosieve layers, the materials of these protective coatings can be the same or different, such as adapted to the environment on both sides of the nanosieve composite (in use).

In case of an inorganic protective coating on a polymer porous layer, such inorganic-polymer-inorganic sandwich design combines the advantages of the inorganic nanostructured thin-film (such as precise pore definition, ultrathin selective layer, nanoscale robustness and chemical inertness) with the advantages of a polymer porous layer such as polymer support membrane (such as flexibility, rollability, cheapness and industrial scalability). Such nanosieve composite is therefore useful for air filtration and also for liquid filtration processes.

Preferably, the protective coating has a thickness in the range of 1-500 nm, such as in the range of 1-200 nm or 5-150 nm, or in the range of 10-100 nm, such as an average thickness (by surface area) in these ranges. The protective coating, in particular inorganic coating, may have a thickness in the range of 1-200 nm, such as in the range of 5-150 nm, or in the range of 10-100 nm. These thicknesses are suitable for providing sufficient protection to a porous layer, in particular the polymer membrane (porous membrane substrate).

Preferably, an intermediate layer, such as said adhesion layer or underlayer and/or stiction layer, has a thickness in the range of 1-100 nm such as in the range of 2-70 nm, preferably in the range of 5-50 nm. Preferably, the nanosieve composite comprises a bottom side intermediate layer, such as an adhesion layer or under layer having a thickness in the range of 1-100 nm such as in the range of 2-70 nm, preferably in the range of 5-50 nm and/or a top side intermediate layer, such as stiction layer, having a thickness in the range of 1-100 nm such as in the range of 2-70 nm, preferably in the range of 5-50 nm.

Preferably, a porous layer, such as a porous membrane substrate, such as a polymeric porous membrane substrate, has an average pore diameter, such as determined by scanning electron microscopy, in the range of 1-20 µm, preferably in the range of 2-10 µm. Suitably, the average pore diameter of a porous layer, such as polymer membrane support, as determined by bubble porosimetry can be in the range of 1-20 µm, such as in the range of 2-10 µm. Alternatively (or in addition to pores), a porous layer, such as the polymer membrane support, can have grooves or channels, optionally periodic grooves or channels, optionally arranged in the same direction. In case a porous layer, such as polymer membrane support, has grooves or channels, the average groove or channel width is preferably in the range of 1-20 µm, such as in the range of 2-10 µm. The pores in the porous layers can include perforations.

Preferably, a porous layer, such as the porous film has an average pore diameter in the range of 1-100 µm, preferably in the range of 10-60 µm.

Preferably, the nanosieve composite comprises both a porous membrane substrate, such as a polymeric porous membrane substrate, having an average pore diameter, such as determined by scanning electron microscopy, in the range of 1-20 µm, preferably in the range of 2-10 µm and a porous film having an average pore diameter in the range of 1-100 µm, preferably in the range of 10-60 µm.

Preferably, a porous layer, such as the porous membrane substrate, has a thickness in the range of 1-100 µm, such as in the range of 20-70 µm, preferably in the range of 40-50 µm. In order to provide sufficient mechanical support and/or protection, the porous layer, such as polymer membrane support, typically has a thickness of at least 1 µm, preferably at least 2 µm more preferably at least 5 µm. From a practical point of view it is not desirable to use a porous layer such as polymer membrane support having a thickness of more than 100 µm. One or more porous layers, such as the polymer membrane support and/or porous film, can advantageously be derived from a porous or non-porous polymer foil or web.

Preferably, said inorganic nanosieve layer has a thickness in the range of 10-200 nm such as in the range of 20-100 nm, preferably in the range of 30-70 nm. The inorganic nanosieve layer can, for example, have a thickness in the range the range of 20-150 nm, or in the range of 50-100 nm. Layer thicknesses of the inorganic nanosieve layer as defined herein can be determined by techniques well-known to the person skilled in the art, including DekTak profilometry or HR-SEM (high resolution scanning electron microscopy). Suitably, layer thickness refers to the average layer thickness, in particular as obtained with HR-SEM.

Preferably, the nanosieve composite of the invention is flexible. The term "flexible" as used in this application is meant to refer to resilient and capable of being flexed without permanent deformation or rupture. Advantageously, this allows the nanosieve of the composite to be rollable and be processed in a roll-to-roll manufacturing process.

Presence of porous layers at both sides of the inorganic nanosieve layer and thus nanosieve composite suitably allows for improved flexibility of the nanosieve composite.

Suitably, the nanosieve composite of the invention is transparent. It is preferred that the nanosieve composite of the invention is transparent for ultraviolet radiation. Such an embodiment is highly advantageous in an application wherein the nanosieve composite is used for biofiltration. Filtered microorganisms can then be killed by ultraviolet radiation treatment. Preferably, the nanosieve stack has transparency in the wavelength range of 200-1000 nm, preferably 250-400 nm in the amount of 30 % or more, preferably 50 % or more, such as 75 % or more such as 90 % or more, in percents regular transmittance.

Preferably, at least one of the layers in the nanosieve composite is electrically conductive, such as with electrical conductivity > 10 S/m at 20 °C.

Preferably, the nanosieve composite stack is rollable down to a diameter of 100 mm or less more preferably 60 mm or less, even more preferably 40 mm or less. Suitably, the nanosieve composite stack is rollable to a diameter of 2 mm or more. The term "rollable" as used in this application is meant to refer to resilient and capable of being rolled without permanent deformation or rupture.

Preferably, the nanosieve composite has one or more of:
a) transparency in the wavelength range of 200-1000 nm, such as in the range of 250-400 nm, preferably 30 % or more, more preferably 50 % or more, in percents regular transmittance,
b) electrical conductivity > 10 S/m at 20°C, more preferably 20 S/m, and
c) rollable down to a diameter of 100 mm or less, such as 40 mm or less.

Preferably, the nanosieve composite has a) and b), more preferably a) and b) and c).

The nanosieve composites of the invention can advantageously be employed in filtration processes, such as an air/gas filtration process, or a liquid filtration process. In particular, the nanosieve composites of the invention are suitable for a liquid filtration process.

In a further aspect, the invention relates to a method for separating a feed flow with particulate matter comprising passing the feed flow over a nanosieve composite of the invention.

When the feed flow with the contaminants is passed over the nanosieve composite of the invention, a permeate (or filtrate) flow will pass through the nanosieve composite, while retentate containing contaminants that are incapable of passing through the nanosieve will remain at the feed side of the nanosieve composite. Due to the flexibility of a porous layer, such as the polymer membrane support, it may be preferable to provide a macroporous rigid surface for further support.

A specific selection of a porous layer, such as the polymer membrane support further allows a dual separation. For example, the inorganic nanosieve layer provides size exclusion, while the porous layer, such as the polymer membrane support provides an exclusion based on size, hydrophilicity, charge, and the like. Such dual separation is advantageous for decreasing the amount of steps in separation processes.

A selection of porous layers provides can provide additional advantages, as a first porous layer (such as porous membrane substrate on a first side of the inorganic nanosieve layer) and a second porous layer (such as porous film on a second other side of the inorganic nanosieve layer) can work together by having complementary properties such as exclusion properties, suitably also with the inorganic nanosieve layer, or even provide a synergistic effect.

In a further aspect, the invention relates to a method of preparing a nanosieve composite, preferably as described, comprising, suitably successively:
- providing an inorganic nanosieve layer on a porous or non-porous substrate,
- optionally providing a glue layer on a first side of said inorganic nanosieve layer,
- attaching a porous or non-porous polymer layer on said inorganic nanosieve layer or said glue layer, said porous or non-porous polymer layer optionally provided with a porous or non-porous glue layer,
- creating pores in said polymer layer in case of a non-pour polymer layer,
and creating pores in said substrate in case of a non-porous substrate,
and creating pores in said glue layer in case of a non-porous glue layer.

In this method, porous suitably refers to the presence of pores or perforations with an average pore diameter of 1 µm or more

In a further aspect, the invention relates to a method of preparing a nanosieve composite, preferably as described, comprising, suitably successively:
1) providing an inorganic nanosieve layer on a substrate,
2) optionally providing a glue layer on a first side of said inorganic nanosieve layer
3) attaching a polymer layer on said inorganic nanosieve layer or said glue layer,
4) creating pores in said polymer layer and creating pores in said substrate, and creating pores in said glue layer in case of a glue layer, optionally creating one or more of these pores comprises etching, optionally one or more or all of these pores are created by etching.

Steps 2) and 3) can be carried out as a combined step.

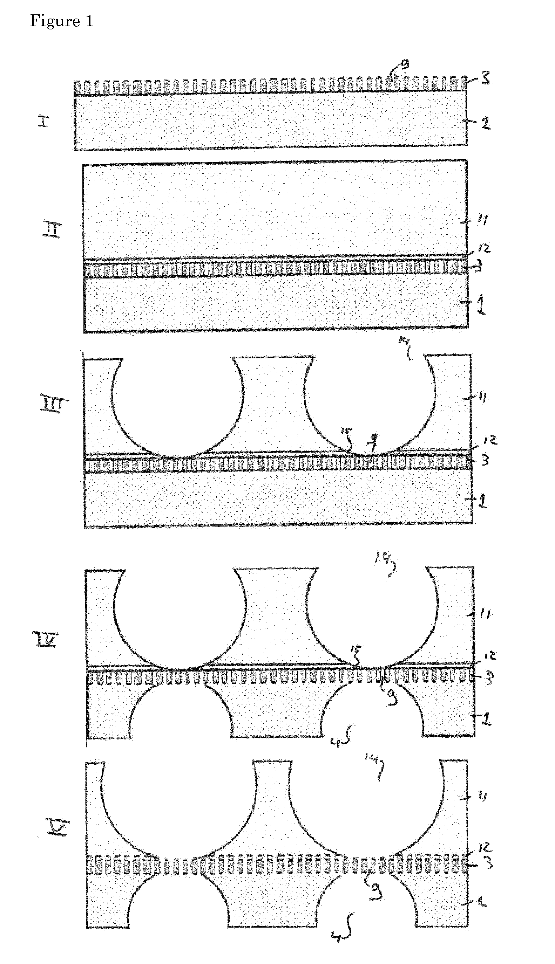

This method is schematically illustrated in figure 1. In step I, an inorganic nanosieve layer 3 with pores 9 on a substrate 1 is provided. In step II, a glue layer 13 is provided on the inorganic nanosieve layer, at the exposed side of it, such that the inorganic nanosieve layer is between the glue layer 13 and the substrate 1. Substrate 1 may comprise an adhesion layer (not depicted). A polymer layer 11 is attached on glue layer 12. In step III, pores 14 are created in the polymer layer 11 and pores 15 in the glue layer, by etching. In step IV, pores 4 are created in substrate 1, by etching.

In figure 1-IV, a nanosieve composite is illustrated. Substrate 1 is metal foil, *e.g.* Cu or Al or a plastic film *e.g.* PET, PEN. The plastic film could have pre-fabricated pores or perforations or holes. Inorganic nanosieve layer 3 is *e.g*. SiN or Al. Glue layer 12 is conventional glue. Polymer layer 11 is *e.g*. a PET or PEN film.

In a further aspect, the invention relates to a method of preparing a nanosieve composite, preferably as described, comprising, suitably successively:
1) providing an inorganic nanosieve layer on a substrate,
2) optionally providing a glue layer on a first side of said inorganic nanosieve layer
3) providing a porous layer on said inorganic nanosieve layer or said glue layer, having an average pore diameter of 1µm or more
4) creating pores in said substrate and creating pores in said glue layer in case of a glue layer, optionally creating one or more of these pores comprises etching, optionally one or more or all of these pores are created by etching.

Step 3) can include attaching the porous layer to the inorganic nanosieve layer or said glue layer. The glue could be already present on the porous layer, such as porous film. A porous layer, such as provided in step c, is suitably knurled polymer, such as PET, with micrometer or millimetre sized pores.

An inorganic nanosieve layer on a substrate can be obtained by the methods described in non-prepublished application PCT/NL2012/050283. An inorganic nanosieve layer on a substrate can also be obtained by the methods disclosed hereinafter.

In a further aspect, the invention relates to a method of preparing a nanosieve composite, preferably as described, comprising, suitably successively:
a) providing a substrate;
b) optionally, depositing a metal adhesion layer or underlayer onto said substrate; optionally comprising comprises physical vapour deposition
c) depositing a first layer of inorganic material onto said substrate or onto said adhesion layer or underlayer; optionally comprising chemical vapour deposition
d) perforating said substrate; optimally comprising laser ablation
e) removing an exposed part of the adhesion layer; optimally comprising laser ablation
f) optionally, depositing a second layer of coating material on the side opposite of said first layer of inorganic material onto said perforated polymer; optionally comprising chemical vapour deposition
g) coating a photoresist on the first layer of inorganic material;
h) generating a nanosieve pattern on the photoresist; optionally comprising imprinting lithography
i) transferring the nanosieve pattern into the inorganic layer and the extra coating layer (if present) optionally comprising etching;
j) removing photoresist optionally comprising etching; and
k) attaching a porous film on top or forming a perforated film on top of this nanosieve stack, optionally comprising gluing the porous film and/or optionally a deposition and patterning process, which could also be done in one combined step.

In a further aspect, the invention relates to a method of preparing a nanosieve composite, preferably as described, comprising, in the order as follows:
a) providing a polymer substrate;
b) optionally, depositing a metal adhesion layer or underlayer onto said substrate; optionally comprising comprises physical vapour deposition
c) depositing a first layer of inorganic material onto said substrate or onto said adhesion layer or underlayer; optionally comprising chemical vapour deposition
g) coating a photoresist on the first layer of inorganic material;
h) generating a nanosieve pattern on the photoresist;, optionally comprising imprinting lithography
i) transferring the nanosieve pattern into the inorganic layer; optionally comprising etching
j) removing photoresist, optionally comprising etching,
d) perforating said polymer substrate; optimally comprising laser ablation
e) removing an exposed part of the adhesion layer; optimally comprising laser ablation
f) optionally, depositing a second layer of inorganic material on the side opposite of said first layer of inorganic material onto said perforated polymer; optionally comprising chemical vapour deposition and
k) attaching a porous film or forming a perforated film on top of this nanosieve stack, optionally comprising gluing the porous film and/or optionally a deposition and patterning process, which could also be done in one combined step.

Herein, "on top of this nanosieve stack" is on the exposed side of the inorganic nanosieve layer, the other side of the inorganic nanosieve layer as the polymer substrate side.

Preferably, the porous film or perforated film has an average pore diameter of 1 µm or more. Preferably, the porous film or perforated is a porous layer as described before.

Preferably, the methods are roll-to-roll fabrication methods.

In yet a further aspect, the invention relates to a method for preparing a nanosieve composite, preferably one as defined hereinabove, comprising (preferably in the indicated sequence) the steps of
a) providing a polymer substrate;
b) depositing a metal adhesion layer or underlayer onto said polymer substrate;
c) depositing a first layer of inorganic material onto said polymer substrate or onto said adhesion layer or underlayer;
d) perforating said polymer substrate;
e) removing an exposed part of the adhesion layer or underlayer;
f) depositing a second layer of inorganic material on the side opposite of said first layer of inorganic material onto said perforated polymer;
g) coating a photoresist on the first layer of inorganic material;
h) generating a nanosieve pattern on the photoresist;
i) transferring the nanosieve pattern into the inorganic layer; and
j) removing photoresist,
k) optionally: on the obtained inorganic nanosieve layer on a substrate, attaching or forming a porous layer (porous film or perforated film), such as on top of this nanosieve stack, optionally comprising gluing the porous film and/or optionally a deposition and patterning process, which could also be done in one combined step.

After step j), an inorganic nanosieve layer on a substrate is obtained, that can be provided with a porous layer, as in optional step (k) or in using another method as described herein.

As a polymer substrate a non-porous polymer foil can be applied. The polymer materials can be as defined hereinabove. Optionally, an adhesion layer or underlayer is deposited on the polymer substrate. The adhesion layer or underlayer can, for instance, be deposited on the polymer substrate by an evaporation technique.

In step c) a first layer of inorganic material is deposited onto the polymer substrate or alternatively onto the optional adhesion layer or underlayer. This can suitably comprise a vapour deposition technique (including physical vapour deposition and chemical vapour deposition), such as plasma enhanced chemical vapour deposition. Plasma enhanced chemical vapour deposition has the advantage that a relatively low processing temperature of about 100 °C can be employed.

Perforation of the polymer substrate in step d) may be performed by laser ablation, such as pulsed laser ablation. In accordance with this step the polymer substrate is rendered porous. The perforation of the polymer substrate may result in the polymer substrate having pores, grooves, and/or channels.

In optional step e), part of the adhesion layer or underlayer that is exposed (on the polymer substrate side) after the polymer perforation is removed. In practice, steps d) and e) may be performed in a single step, for instance, by laser ablation. Alternatively, part of the adhesion layer or underlayer can be removed by an etching process, such as plasma etching. Preferably, the part of the adhesion layer or underlayer that is exposed by removal of the polymer perforation is removed in optional step e). In a preferred embodiment, the entire part of the adhesion layer or underlayer that is exposed is removed in step e).

In an embodiment the polymer is perforated after which the optional adhesion layer is applied onto the perforated polymer. Subsequently, part of the adhesion layer in the perforated polymer is removed to expose the first layer of inorganic material in the polymer perforations.

In step f), a second layer of inorganic material is deposited on the side opposite of the first layer of inorganic material onto said perforated polymer. Advantageously, the same type of inorganic material could be deposited in steps c) and f). Deposition of the inorganic material in step f) can again be suitably performed using a vapour deposition technique (including physical vapour deposition and chemical vapour deposition), such as plasma enhanced chemical vapour deposition.

A photoresist is applied onto the first layer of inorganic material. Various kinds of suitable photoresists are well-known in the field of lithography. Both positive photoresists, as well as negative photoresists may be employed. Preferably, the photoresist is an ultraviolet sensitive resist. A suitable technique for applying the photoresist onto the first layer of inorganic material is by coating such as from coating apparatus, such as a slot-die coater. However, the photoresist can also be applied using a printing process. Typically, the thickness of the photoresist layer is in the range of 50-500 nm, such as in the range of 100-300 nm or 150-250 nm.

After the photoresist has been applied onto the first layer of inorganic material a nanosieve pattern is generated in the photoresist. This may for example be done by lithography techniques, such as nanoimprint lithography or laser-interference lithography.

The generated nanosieve pattern is thereafter transferred into the first layer of inorganic material in step i). A suitable technique for carrying out this step is by etching, such as plasma etching and/or chemical etching. Plasma etching can, for example, involve a CF₄ + O₂ mixed mode plasma.

Upon having transferred the nanosieve pattern into the first layer of inorganic material, the photoresist can be removed. This may also be done using a plasma technique, such as using an oxygen (O₂) plasma.

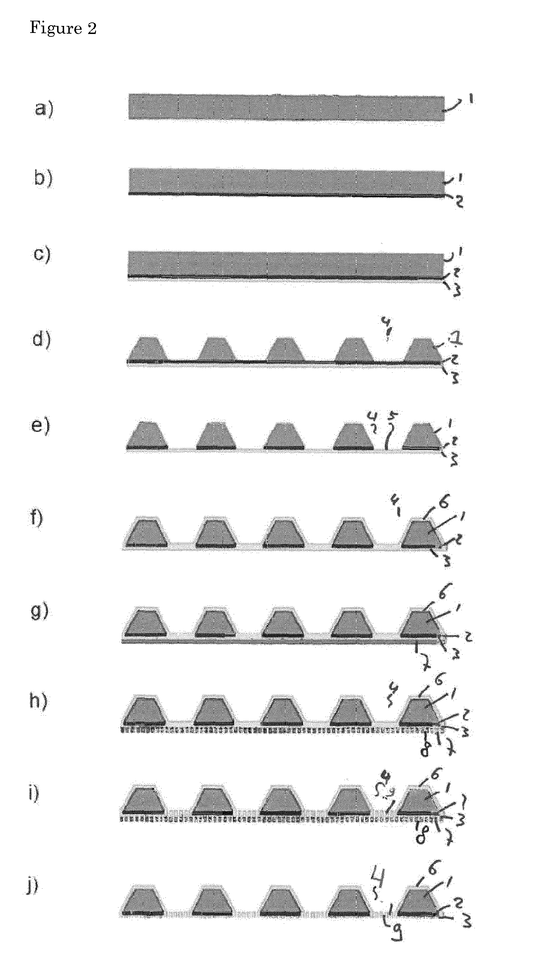

This method is further clarified by the scheme of figure 2 which shows a two-dimensional cross-sectional representation of the method and intermediary steps for preparing a nanosieve composite. In step a of figure 2, a polymer substrate 1 is provided. In step b, a metal adhesion layer 2 (underlayer) is deposited onto said polymer. In step c, a first layer of inorganic material 3 is deposited onto adhesion layer 2. In step d, polymer substrate 1 is perforated to provide pores 4, such as perforations. In step e, an exposed part of adhesion layer 2 is removed, to provide pores or perforations or gaps 5 in or between adhesion layer 2. In step f, a second layer of inorganic material 6 is deposited, on the polymer substrate side. In step g, a photoresist 7 is coated on the inorganic material layer 3. In step h, a nanosieve pattern 8 is generated on or in the photoresist 7. In step i, nanosieve pattern 8 is transferred into inorganic material layer 3, thus forming pores 9 in inorganic material layer 3. In step j, photoresist 8 is removed.

In a further aspect, the invention relates to a method for preparing a nanosieve composite (inorganic nanosieve layer on a substrate), comprises successively:
a) providing a polymer substrate;
b) depositing a adhesion layer or underlayer onto said polymer substrate;
c) depositing a first layer of inorganic material onto said polymer substrate or onto said adhesion layer or underlayer;
g) coating a photoresist on the first layer of inorganic material;
h) generating a nanosieve pattern on the photoresist;
i) transferring the nanosieve pattern into the inorganic layer;
j) removing photoresist.
d) perforating said polymer substrate;
e) removing an exposed part of the adhesion layer or underlayer (on substrate side) that is exposed; and
f) depositing a second layer of inorganic material on the side opposite of said first layer of inorganic material onto said perforated polymer.

Advantageously these methods can be performed using the roll-to-roll approach. This allows an easy and quick fabrication of the nanosieve composites of the invention. Moreover, it enables mass-production.

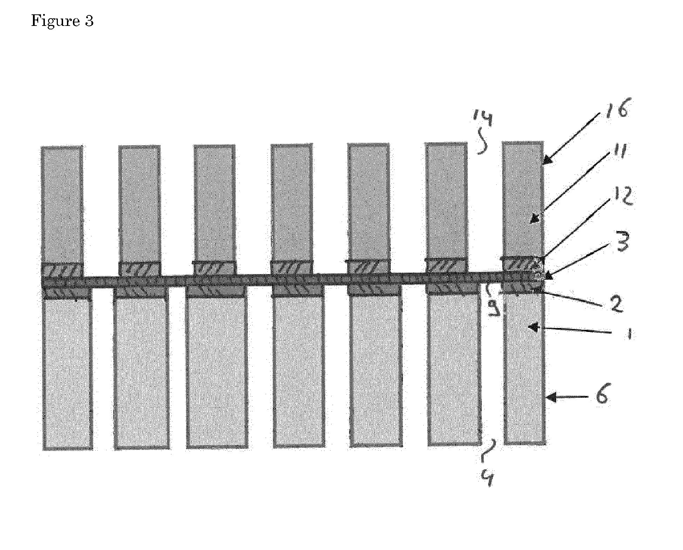

Figure 3 shows a schematic example of a nanosieve composite. The nanosieve composite comprises a porous substrate 1 with pores 4, an optional adhesive layer 2 (intermediate layer), an inorganic nanosieve 3 with pores 9, a porous top film (porous layer) 11, an optional stiction layer 12 between porous top film 11 and inorganic nanosieve 3 for good adhesion, and an optional protective coating 16 on porous top film 11. Porous top film 11 has pores 14.

In a further aspect, the invention relates to supporting an inorganic nanosieve layer on a protected porous polymeric support.

In yet a further aspect, the invention relates to a nanosieve composite comprising an inorganic nanosieve layer supported on a porous polymer membrane substrate and an adhesion layer or underlayer between the inorganic nanosieve layer and the polymer substrate, wherein said polymer membrane comprises an inorganic coating such that the polymeric support is sandwiched between the inorganic coating and the inorganic sieve layer, and wherein said inorganic nanosieve layer has an average pore diameter as determined by scanning electron microscopy of 200 nm or less, suitably provided with one or more porous layers as described on the other side of the inorganic nanosieve layer.

In a further aspect, the invention relates to a nanosieve composite that provides a geometrically patterned inorganic thin-film nanosieve supported on a macroporous polymer membrane.

In yet a further aspect, the invention relates to that to protect the polymer support from degrading by aggressive fluids penetrating though the nanopores, the polymer support is provided with a metallic adhesion layer or underlayer between the inorganic nanosieve layer and the polymer substrate.

In a further aspect, the invention relates to a roll-to-roll apparatus for carrying out the method, and a method for separating a feed flow with particulate matter.

In yet a further aspect, the invention relates to an apparatus for manufacturing composite nanosieve membranes, preferably by carrying out a method as described.

The apparatus comprises
- a substrate supply for supplying a continuous substrate web, for instance a polymer substrate, in a supplying direction;
- a first deposition unit downstream of the substrate supply for depositing a first layer of inorganic material onto a first surface of the substrate when the substrate is passing said unit in said supplying direction;
- a laser ablator, provided downstream of the first deposition unit, and arranged to face a second surface of the substrate, opposite the first surface, which laser ablator is configured to remove at least part of the substrate material;
- at least one further deposition unit downstream of the substrate supply for depositing a second layer of inorganic material onto the second surface of the substrate when the substrate is passing said further provision in said supplying direction.
- a coating device, such as a slot-die coating device, provided downstream of the respective first or second deposition unit for coating a photo resist layer onto one of the first and second substrate surfaces;.
- an imprinting device arranged downstream of the coating device, for imprinting a nanosieve pattern into the photo resist layer; and
- an etching device arranged downstream the imprinting device for transferring said nanosieve pattern from the photo resist layer into the inorganic layer.

The first deposition unit can deposit a first layer of inorganic material onto on surface of the substrate, while the further deposition unit can deposit a second layer of inorganic material on the opposite surface of the substrate. This allows a protection of the substrate by the inorganic material on both surfaces of the substrate.

The apparatus can comprise a third deposition unit, for instance an evaporator, arranged upstream of the first or second deposition unit, for applying a thin metal layer on the first or second substrate surface before applying said inorganic material layer onto said first or second substrate surface. This thin metal layer can, for instance, be an adhesion layer or underlayer as described herein. Alternatively, the adhesion layer can be applied by the first deposition unit.

Preferably, the apparatus is a roll-to-roll apparatus, wherein the apparatus comprises a substrate rewinding system for rewinding the processed substrate, wherein both, the substrate supply and the substrate receiver comprise a frame for rotatably holding a roll of continuous substrate web.

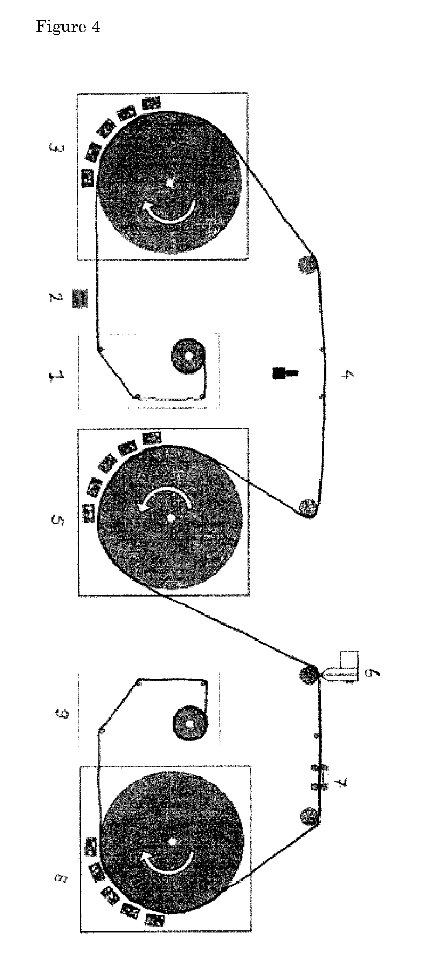

An example of such a roll-to-roll apparatus is schematically shown in figure 4. In this example, an unwinding system 1 supplies a continuous polymer substrate web. The polymer substrate web passes an evaporator 2, which can evaporate a thin (such as about 10 µm thick) metallic (such as tantalum) layer on top of the polymer substrate web. The web then passes a plasma enhanced chemical vapour deposition system 3, wherein an inorganic (such as a ceramic) layer can be deposited. Subsequently, the back side of the web is ablated using a pulsed laser source 4 to form grooves or channels in the polymer web. During this ablation, the metallic layer is also removed inside the areas exposed by the vias (stopping on the inorganic layer). Optionally, metals like tantalum can also be removed by plasma etching. Subsequently, a second inorganic layer (such as a ceramic layer) is deposited on the back side of the web using another plasma enhanced vapour deposition system 5. Then, a slot-die coater 6 (or any other suitable coating or printing device) is used to coat the web with an ultraviolet light sensitive resist, after which a rolling nanoimprint lithography 7 is done to create the nanosieve pattern on the resist layer. Subsequently, the nanosieve pattern in transferred into the silicon nitride layer using plasma etching 8 and the resist is stripped in oxygen plasma. Finally, the processed polymer web is rewinded using rewinding system 9.

In a further aspect, the invention relates to a nanosieve composite comprising an inorganic nanosieve layer supported on a porous polymer membrane substrate and an adhesion layer or underlayer between the inorganic nanosieve layer and the polymer substrate, wherein said polymer membrane comprises an inorganic coating such that the polymeric support is sandwiched between the inorganic coating and the inorganic sieve layer, and wherein said inorganic nanosieve layer has an average pore diameter as determined by scanning electron microscopy of 200 nm or less. Preferably, said porous polymer membrane substrate comprises pores with a pore size of 1 µm or more.

Preferably, said nanosieve composite comprises a porous layer attached on the other side of the inorganic nanosieve layer. Preferably, the coverage of said inorganic coating is such that essentially no surface of the polymer membrane is exposed.

Preferably, said inorganic coating has a thickness in the range of 1-200 nm. Preferably, said inorganic coating has a thickness in the range of 5-150 nm, or in the range of 10-100 nm. Preferably, said adhesion layer or underlayer has a thickness in the range of 1-100 nm. Preferably, said adhesion layer has a thickness in the range of 2-70 nm or in the range of 5-50 nm.

Preferably, the porous polymer membrane has an average pore diameter as determined by scanning electron microscopy in the range of 1-20 µm. Preferably, the porous polymer membrane has an average pore diameter as determined by scanning electron microscopy in the range of 2-10 µm.

Preferably, said polymer membrane substrate has a thickness in the range of 1-100 µm. Preferably, said polymer membrane substrate has a thickness in the range of 20-70 µm, preferably in the range of 40-50 µm. Preferably, said inorganic nanosieve layer has a thickness in the range of 10-200 nm. Preferably, said inorganic nanosieve layer has a thickness, such as in the range of 20-100 nm, preferably in the range of 30-70 nm.

In a further aspect, the invention relates to a method of preparing a nanosieve composite, preferably as described, comprising successively:
a) providing a polymer substrate;
b) depositing a metal adhesion layer or underlayer onto said polymer substrate;
c) depositing a first layer of inorganic material onto said polymer substrate or onto said adhesion layer or underlayer;
d) perforating said polymer substrate;
e) removing an exposed part of the adhesion layer;
f) depositing a second layer of inorganic material on the side opposite of said first layer of inorganic material onto said perforated polymer;
g) coating a photoresist on the first layer of inorganic material;
h) generating a nanosieve pattern on the photoresist;
i) transferring the nanosieve pattern into the inorganic layer; and
j) removing photoresist.

In a further aspect, the invention relates to a method of preparing a nanosieve composite, preferably as described, comprising successively:
a) providing a polymer substrate;
b) depositing a metal adhesion layer or underlayer onto said polymer substrate;
c) depositing a first layer of inorganic material onto said polymer substrate or onto said adhesion layer or underlayer;
g) coating a photoresist on the first layer of inorganic material;
h) generating a nanosieve pattern on the photoresist;
i) transferring the nanosieve pattern into the inorganic layer;
j) removing photoresist.
d) perforating said polymer substrate;
e) removing an exposed part of the adhesion layer; and
f) depositing a second layer of inorganic material on the side opposite of said first layer of inorganic material onto said perforated polymer.

Preferably, in both methods, step b) comprises physical vapour deposition. Preferably, in both methods, steps c) and/or f) comprise chemical vapour deposition. Preferably, in both methods, steps d) and/or e) comprise laser ablation. Preferably, in both methods step h) comprises imprinting lithography. Preferably, in both methods steps i) and/or j) comprise etching. Preferably, in both methods, the method is performed in a roll-to-roll fabrication method.

The invention also relates to an apparatus for manufacturing composite nanosieve membranes, preferably by carrying out the method as described, the apparatus comprising;
- a substrate supply for supplying a continuous substrate web, for instance a polymer substrate, in a supplying direction;
- a first deposition unit downstream of the substrate supply for depositing a first layer of inorganic material onto a first surface of the substrate when the substrate is passing said unit in said supplying direction;
- a laser ablator, provided downstream of the first deposition unit, and arranged to face a second surface of the substrate, opposite the first surface, which laser ablator is configured to remove at least part of the substrate material;
- at least one further deposition unit downstream of the substrate supply for depositing a second layer of inorganic material onto the second surface, of the substrate when the substrate is passing said further provision in said supplying direction;
- a coating device, such as a slot-die coating device, provided downstream of the respective first or second deposition unit for coating a photo resist layer onto one of the first and second substrate surfaces;
- an imprinting device arranged downstream of the coating device, for imprinting a nanosieve pattern into the photo resist layer; and
- an etching device arranged downstream the imprinting device for transferring said nanosieve pattern from the photo resist layer into the inorganic layer.

Preferably, the apparatus comprises a third deposition unit, for instance an evaporator, arranged upstream of the first or second deposition unit, for applying a thin metal layer on the first or second substrate surface before applying said inorganic material layer onto said first or second substrate surface.

Preferably, the apparatus is a roll-to-roll apparatus, wherein the apparatus comprises a substrate rewinding system for rewinding the processed substrate, wherein both, the substrate supply and the substrate rewinding system comprise a frame for rotatably holding a roll of continuous substrate web.

The invention also relates to a method of separating a feed flow with particulate matter comprising passing the feed flow over a nanosieve composite as described.

## Claims

1. Nanosieve composite comprising
- an inorganic nanosieve layer having an average pore diameter of 200 nm or less, and
- two or more porous layers having an average pore diameter of 1 µm or more,
wherein at least one porous layer is at a first side of said inorganic nanosieve layer and at least one porous layer is at a second side of said inorganic nanosieve layer.

2. Nanosieve composite according to claim 1, wherein the inorganic nanosieve layer has a top side and a bottom side and wherein the inorganic nanosieve layer is provided with a porous membrane substrate at the bottom side of said inorganic nanosieve layer, and a porous film on the top side of said inorganic nanosieve layer.

3. Nanosieve composite according to claim 1 or 2, comprising an intermediate layer, such as an adhesion layer or underlayer or stiction layer, between the inorganic nanosieve layer and a porous layer.

4. Nanosieve composite according to any one of claims 1-3, wherein a porous layer comprises a polymeric material.

5. Nanosieve composite according to any one of claims 1-4, wherein a porous layer comprises carbon paper, carbon cloth or a metal.

6. Nanosieve composite according to any one of claims 1-5, wherein said inorganic nanosieve layer comprises of a metal, alloy or ceramic based material or an inorganic material mixed together with an organic material.

7. Nanosieve composite according to any one of claims 1-6, wherein a porous layer is at least partially coated with a protective coating, preferably essentially completely coated with a protective coating, preferably such that essentially no surface of the porous layer is exposed.

8. Nanosieve composite according to claim 7, wherein said protective coating has a thickness in the range of 1-500 nm, such as in the range of 1-200 nm or 5-150 nm, or in the range of 10-100 nm.

9. Nanosieve composite according to any one of claims 1-8, wherein an intermediate layer, such as said adhesion layer or underlayer and/or stiction layer, has a thickness in the range of 1-100 nm such as in the range of 2-70 nm, preferably in the range of 5-50 nm.

10. Nanosieve composite according to any one of claims 1-9, wherein a porous layer, such as a porous membrane substrate, has an average pore diameter, such as determined by scanning electron microscopy, in the range of 1-20 µm, such as in the range of 2-10 µm.

11. Nanosieve composite according to any one of claims 1-10, wherein a porous layer, such as the porous film has an average pore diameter in the range of 1-100 µm, preferably in the range of 10-60 µm.

12. Nanosieve composite according to any one of claims 1-11, wherein a porous layer, such as the porous membrane substrate, has a thickness in the range of 1-100 µm, such as in the range of 20-70 µm, preferably in the range of 40-50 µm.

13. Nanosieve composite according to any one of claims 1-12, wherein said inorganic nanosieve layer has a thickness in the range of 10-200 nm such as in the range of 20-100 nm, preferably in the range of 30-70 nm.

14. Nanosieve composite according to any one of claims 1-13, having one or more, and preferably all, of:
a) transparency in the wavelength range of 200-1000 nm,
b) electrical conductivity > 10 S/m at 20 °C, and
c) rollable down to a diameter of 40 mm or less.

15. Method of preparing a nanosieve composite, preferably according to any one of claims 1-14, comprising successively:
- providing an inorganic nanosieve layer on a porous or non-porous substrate,
- optionally providing a glue layer on a first side of said inorganic nanosieve layer,
- attaching a porous or non-porous polymer layer on said inorganic nanosieve layer or said glue layer, said porous or non-porous polymer layer optionally provided with a porous or non-porous glue layer,
creating pores in said polymer layer in case of a non-pour polymer layer, and creating pores in said substrate in case of a non-porous substrate,
and creating pores in said glue layer in case of a non-porous glue layer.
